# FASCICULE DE BREVET EUROPEEN

(11) **EP 1 564 164 B1**
(45) Date de publication et mention de la délivrance du brevet: **24.05.2006**
(21) Numéro de dépôt: 04350002.4
(22) Date de dépôt: 10.02.2004
(51) Int. Cl.: B65G 21/20, B65G 15/62, B65G 21/08

(54) **Convoyeur à bande en auge**
Muldenbandförderer
Troughed belt conveyor

(43) Date de publication de la demande: 17.08.2005
(73) Titulaire: SOCIETE FINANCIERE DE GESTION, 59100 Roubaix (FR)
(72) Inventeur: Simons, Herve, 59700 Marcq en Baroeul (FR); Lacroix, Olivier, 76540 Limpiville (FR)
(74) Mandataire: Tournel, Jean Louis

(56) Documents cités:
- FR-A- 2 283 070
- FR-A- 2 800 362
- US-A- 2 695 701

## Description

L'invention se rapporte à une surface de guidage destinée à porter une surface sans fin portante.

Elle se rapporte également au convoyeur à bande ou à tasseaux porteurs pourvu de la dite surface de guidage..

Le transfert de produits en vrac d'un endroit vers un autre peut être réalisé avec différents appareils dont le choix dépend de différents paramètres tels que la distance du transport, le volume à transporter par unité de temps etc.

Pour les produits en vrac, on connaît principalement les vis sans fin ou les convoyeurs à bande .

Les vis sans fin sont généralement utilisées sur de courtes distances alors que les convoyeurs à bande sont utilisés sur de plus grandes distances.

Lorsque ces convoyeurs à bande sans fin transportent des produits en vrac, la partie active de la bande doit être conformée en V ou en U afin de constituer une sorte de rigole ou auge contenant le produit tout au long de son parcours.

Couramment, pour obtenir cette forme en V ou en U, la bande circule sur des ensembles de rouleaux porteurs répartis le long du parcours.

La position géométrique des rouleaux d'un ensemble définit la concavité de la bande et donc la génératrice souhaitée.

Généralement, pour cet ensemble de guidage, on fait appel à un rouleau central horizontal et à deux ou plusieurs rouleaux latéraux inclinés par rapport à l'horizontal pour relever les bords de la bande sans fin.

Lorsque ces convoyeurs transportent des matériaux granuleux tels que ceux présents sur les ports ou sur les sites d'extraction et de transformation de granulats, une partie des matériaux transportés par le convoyeur se transforme en aérosol et vient polluer l'environnement .

La vitesse de déplacement de la bande accroît les effets du vent et la quantité de matière envolée est assez conséquente notamment sur les quais de déchargement des pondéreux.

Ces envols doivent être réduits.

Une solution (FR-A-2.283.070) est apparue en logeant la partie active de la bande dans un tube cylindrique de révolution.

Ces envols doivent être réduits.

Une solution (FR-A-2.283.070) est apparue en logeant la partie active de la bande dans un tube cylindrique de révolution.

Ce tube peut être en une seule pièce ou formé de tronçons de tube assemblés.

La bande glisse dans un tube et c'est la face interne du tube qui sert de moyen de guidage et de mise en forme géométrique de la bande.

Lors du déplacement de la bande dans le tube, il se produit deux phénomènes.

Le premier phénomène est la formation d'un coussin d'air entre la surface porteuse du tube et la face inférieure de la bande. La bande se trouve alors comme suspendue.

Cela évite l'utilisation de nombreux rouleaux.

Le second phénomène est la formation d'un courant d'air véhiculant la majorité des poussières vers la sortie.

Avec un tel système on limite ainsi les aérosols.

En effet, les poussières ne peuvent s'échapper du tube qu'au niveau des extrémités où des moyens de contrôle de la dispersion peuvent être prévus.

Malheureusement, cette technologie présente un inconvénient majeur en ce sens que de la poussière parvient à s'infiltrer entre la bande et la surface porteuse et, en s'accumulant, dégrade le fonctionnement du convoyeur.

Cela provoque, alors, des arrêts et des opérations de nettoyage.

Ces arrêts sont très longs car il faut se rappeler que la bande est logée dans un tube formé de tronçons tubulaires mis bout à bout et qui peut être relativement long .

Cela rend difficile la localisation de l'incident et son traitement.

Il en est de même pour les opérations de maintenance qui doivent être faites régulièrement.

Il est connu FR 2 800 362 une surface de guidage définie par un rouleau horizontal et deux surfaces latérales situées de part et d'autre du rouleau precité.

L'invention se propose d'apporter une solution aux problèmes évoqués notamment ci dessus.

A cet effet, l'invention a pour objet une surface de guidage destinée à soutenir une surface portante sans fin d'un convoyeur,
cette surface étant caractérisée en ce que :
la courbure de la surface de guidage est définie par un rouleau horizontal et deux surfaces latérales situées de part et d'autre du rouleau précité

Elle se rapporte également au convoyeur équipé.

L'invention sera bien comprise à l'aide de la description ci-après faite à titre d'exemple non limitatif en regard du dessin qui représente schématiquement :
FIG 1 : vue en coupe transversale d'un convoyeur selon l'invention
FIG 2 : vue latérale de la figure 1.
FIG 3 : vue du convoyeur de la figure 1 lors d'une opération de maintenance.
FIG 4 : le convoyeur de la figure 2 lors d'une opération de maintenance.
FIG 5 : une variante d'un convoyeur.
FIG 6 : un dispositif de maintien d'un rouleau.
FIG 7 : une variante d'un dispositif de maintien d'un rouleau.

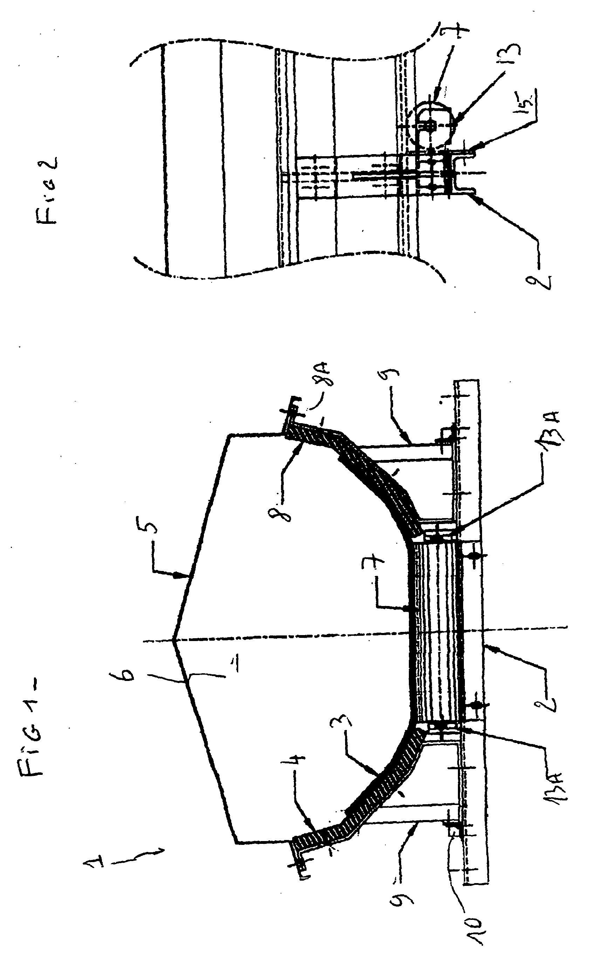

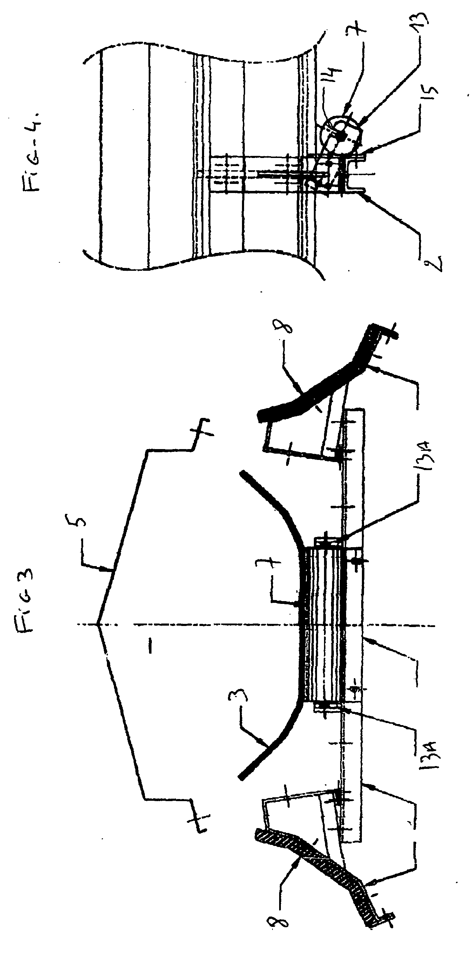

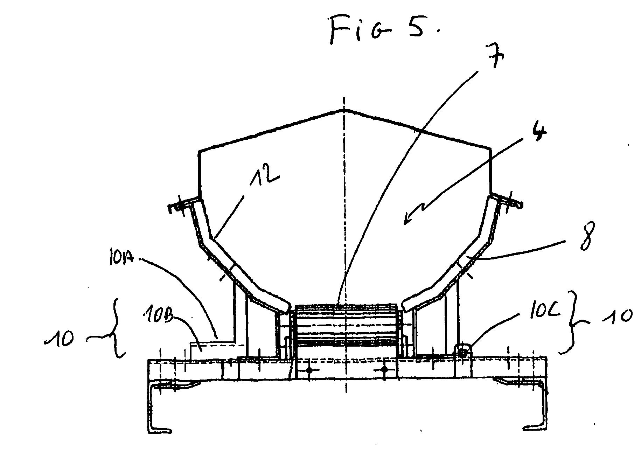

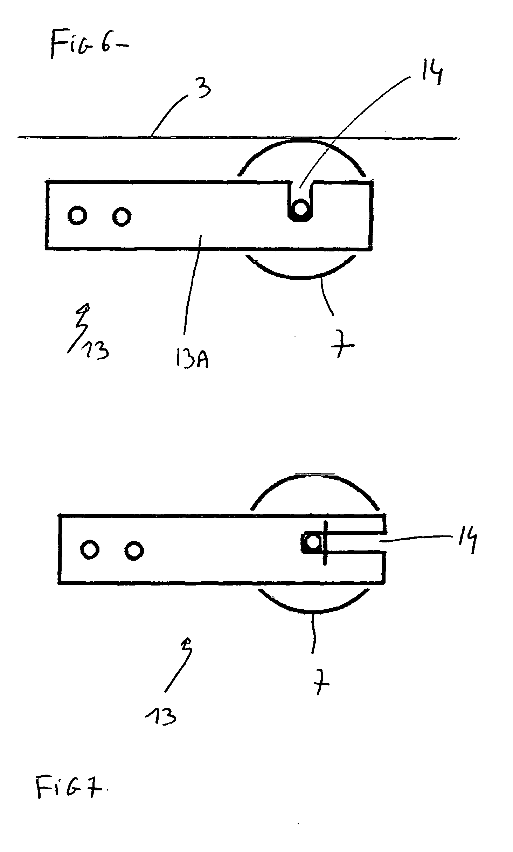

En se reportant au dessin on voit un convoyeur 1 à bande ou à tasseaux porteurs.

Classiquement un convoyeur 1 comprend : portée par un châssis 2 , une surface 3 sans fin portante se déplaçant sur une surface 4 de guidage définissant une génératrice courbe.

Il est monté au dessus de la bande ou surface 3 sans fin, un capot 5 pour constituer un volume 6 clos.

Les bords de la surface 3 sans fin portante doivent être relevés pour former une rigole destinée à contenir le matériau en vrac déposé sur ce convoyeur.

Des tendeurs et moyens moteurs connus assurent le déplacement de la bande sans fin.

Le matériau transporté se déplace dans un tunnel ouvert aux deux extrémités.

La courbure de la bande vue selon l'axe transversal au déplacement de la bande ou encore la génératrice de la rigole est définie par un rouleau 7 horizontal et deux surfaces 8 latérales éventuellement courbes situées de part et d'autre du rouleau précité.

Chaque surface latérale est d'étendue supérieure à une génératrice. Il ne s'agit pas d'un rouleau mobile, mais d'une surface d'appui fixe par rapport au déplacement de la bande.

Chaque surface 8 latérale se prolonge latéralement au delà de la surface sur laquelle s'appuie la bande sans fin. Il n'y a pas d'interruption depuis son bord interne jusqu'à son bord externe.

Elles forment, chacune, un angle avec l'horizontal.

Au moins localement, au moins une des surfaces 8 latérales est fixée au châssis par des moyens 9 de fixation rapide pour constituer une sorte de trappe d'accès dégageant rapidement une ouverture dans le volume clos.

Par des moyens de fixations rapide, on comprendra, par exemple, un verrou ou une vis à pas rapide à l'opposé d'une série de boulons nécessitant un temps de démontage assez long par exemple de dix minutes.

La surface 8 latérale a donc une fonction de guidage de la bande sans fin et une fonction de trappe d'accès.

Tout au long du parcours, la surface latérale présentée par la paroi latérale est continue.

Ainsi, avec le capot 5 et la bande sans fin, on reconstitue un tube fermé.

Le convoyeur présente cependant une ouverture à la base. Cette ouverture est située au niveau de l'emplacement des rouleaux horizontaux répartis le long du parcours. Ainsi, si de la matière pénètre dans l'espace situé entre la surface latérale et la face inférieure de la bande, elle peut s'échapper par l'ouverture d'où aucun risque d'accumulation.

La surface 8 latérale amovible est, de préférence, portée par des moyens 10 de guidage permettant de la déplacer entre deux positions définies à l'avance, à savoir une position active et une position dite d'entretien où la surface latérale est écartée de la bande et permet l'accès visuel de la bande.

Un verrouillage sera effectué par un verrou simple à activer ou à désactiver.

La paroi présentant la surface de guidage est, par exemple, portée par une console.

Ces moyens 10 de guidage sont, dans une première forme de réalisation, aptes à réaliser un guidage en translation par exemple au moyen d'au moins une coulisse 10A et de son coulisseau 10B .

Selon un autre mode, chaque élément 8 de paroi latérale est fixé par au moins une charnière 10C en sorte d'obtenir un basculement ou une rotation autour d'un axe défini lors du montage.

On a représenté la forme sur une articulation d'axe parallèle à l'axe de déplacement de la bande sans fin.

La charnière est placée à la base de la paroi latérale qui est portée par une pièce de soutien.

Cette charnière pourrait être d'axe vertical, chaque paroi latérale se comportant, alors, comme une porte battante.

Il suffit de basculer le support portant la surface latérale courbe pour dégager l'accès à la bande.

Cet aspect permet très facilement de déplacer une partie de la paroi latérale du convoyeur afin d'accéder à l'intérieur du tube de confinement de la matière.

Egalement, si de la matière s'introduit dans l'espace situé entre la face inférieure de la bande et la face supérieure de la surface latérale courbe, elle s'évacue par l'interstice existant entre le rouleau et la surface latérale courbe.

De préférence, les surfaces 8 latérales seront mobiles rapidement en tous points.

Comme on peut le voir sur le dessin, la face active de la surface 8 latérale se compose d'au moins deux plans ou deux courbes formant entre eux une cassure 12 permettant de bloquer la bande dans son déplacement latéral.

Cette cassure se situe dans une zone de la surface d'appui qui théoriquement n'est pas en contact avec la bande lorsque celle ci est centrée sur son axe de déplacement.

En effet, lors de son déplacement, la bande ne se maintient pas rigoureusement dans l'axe de déplacement mais se déplace latéralement. Ainsi, lorsque le bord de la bande heurte la cassure, l'effort pour aller au delà de cette cassure devant augmenter, la bande repart dans l'autre sens par un phénomène de réaction.

Les parois latérales sont réalisées, par exemple en acier.

Au moins la surface active de la surface latérale présente une rugosité faible. Une couche d'un matériau facilitant le glissement peut recouvrir la paroi latérale présentant ladite surface latérale.

Comme on peut le voir le capot est rehaussé pour augmenter le volume du tube et limité la surpression.

Le bord libre 8A de la paroi latérale présentant la surface latérale est solidarisé au capot par un moyen de fixation démontable tel un verrou.

Le capot pourrait être monté sur une articulation .

Pour faciliter la maintenance, on a prévu que le rouleau 7 horizontal soit monté sur un support 13 basculant permettant de le dégager rapidement pour le changer.

Ce support comprend, par exemple, deux joues 13A présentant chacune une entaille 14 permettant d'y glisser l'axe de rotation du rouleau horizontal.

Les entailles 14 sont prévues pour engager l'axe du rouleau depuis le dessus.

Ainsi, lorsque le support est relevé, le rouleau est appliqué sous la bande.

Ce rouleau 7 ne risque pas ainsi de sortir de ces entailles.

Les entailles 14 pourraient déboucher vers l'avant ou le dessous mais cela oblige à prévoir un moyen de verrouillage de l'entrée de l'entaille.

Le châssis ou la traverse portant les surfaces latérale et le rouleau porte un dispositif de protection point rentrant.

Avantageusement, le support porte le dispositif 15 de protection point rentrant limitant le risque qu'un vêtement soit happé par le rouleau et la bande.

Il s'agit d'une plaque 15 venant se placer en amont du rouleau.

Ces dispositions facilitent grandement l'entretien technique.

Le rouleau et le surfaces latérales avec leurs moyens de fixation rapide sont montés sur une traverse formant un ensemble facile à fixer sur un châssis existant.

Le capot peut être rehaussé en partie verticale.

## Revendications

1. Surface (4) de guidage d'un convoyeur destinée à porter une surface (3) sans fin portante, cette surface de guidage étant définie par un rouleau (7) horizontal et deux surfaces (8) latérales situées de part et d'autre du rouleau précité, chaque surface latérale se prolongeant au delà de la surface d'appui occupée par la bande (3), cette surface de guidage étant **caractérisée en ce qu'**au moins localement, au moins une des surfaces latérales est fixée au châssis par des moyens (9) de fixation rapide pour constituer une trappe d'accès.

2. Surface de guidage selon la revendication 1 **caractérisée en ce que** la surface (8) latérale amovible est portée par des moyens (10) de guidage permettant de la déplacer entre deux positions définies à l'avance.

3. Surface de guidage selon la revendication 2 **caractérisée en ce que** les moyens de guidage sont des moyens de guidage en translation.

4. Surface de guidage selon la revendication 2 **caractérisée en ce que** les moyens de guidage sont des moyens de guidage en rotation.

5. Surface de guidage selon la revendication 1 **caractérisée en ce que** la surface de guidage comprend une cassure.

6. Surface de guidage selon la revendication 1 **caractérisée en ce que** la surface latérale porte une couche d'un matériau facilitant le glissement.

7. Surface de guidage selon la revendication 1 **caractérisée en ce que** le rouleau (7) horizontal est monté sur un support (13) basculant.

8. Surface de guidage selon la revendication 7 **caractérisée en ce que** le support comprend deux joues.

9. Surface de guidage selon la revendication 8 **caractérisée en ce que** le support comprend deux entailles (14) pour recevoir l'axe du rouleau.

## Claims

1. Guide surface (4) of a conveyor designed to support a transporting, endless surface (3), this guide surface being defined by a horizontal roller (7) and two lateral surfaces (8) located on either side of said roller, each lateral surface extending beyond the support surface occupied by the belt (3), this guide surface being **characterised in that**, at least locally, at least one of the lateral surfaces is fixed to the chassis by rapid fixing means (9) in order to form an access door.

2. Guide surface as claimed in claim 1, **characterised in that** the detachable lateral surface (8) is supported by guide means (10) enabling it to be displaced between two positions defined beforehand.

3. Guide surface as claimed in claim 2, **characterised in that** the guide means are means for guiding translating movement.

4. Guide surface as claimed in claim 2, **characterised in that** the guide means are means for guiding rotating movement.

5. Guide surface as claimed in claim 1, **characterised in that** the guide surface has a break.

6. Guide surface as claimed in claim 1, **characterised in that** the lateral surface has a layer of material to facilitate sliding movement.

7. Guide surface as claimed in claim 1, **characterised in that** the horizontal roller (7) is mounted on a tilting support (13).

8. Guide surface as claimed in claim 7, **characterised in that** the support has two cheek-plates.

9. Guide surface as claimed in claim 8, **characterised in that** the support has two slots (14) for receiving the roller shaft.

## Patentansprüche

1. Führungsfläche (4) eines Förderers, die dazu bestimmt ist, eine Endlosauflagefläche (3) zu tragen, wobei diese Führungsfläche von einer waagrecht verlaufenden Rolle (7) und zwei Seitenflächen (8) definiert wird, die beiderseits der genannten Rolle liegen, wobei jede Seitenfläche sich über die von dem Band (3) eingenommene Abstützfläche fortsetzt, wobei diese Führungsfläche **dadurch gekennzeichnet ist, dass** zumindest bereichsweise mindestens eine der Seitenflächen am Gestell über Schnellbefestigungsmittel (9) befestigt ist, um eine Zugangsklappe zu bilden.

2. Führungsfläche nach Anspruch 1, **dadurch gekennzeichnet, dass** die abnehmbare Seitenfläche (8) von Führungsmitteln (10) getragen wird, über die sie zwischen zwei vorbestimmten Stellungen verstellt werden kann.

3. Führungsfläche nach Anspruch 2, **dadurch gekennzeichnet, dass** die Führungsmittel Mittel zur Verschiebeführung sind.

4. Führungsfläche nach Anspruch 2, **dadurch gekennzeichnet, dass** die Führungsmittel Mittel zur Drehführung sind.

5. Führungsfläche nach Anspruch 1, **dadurch gekennzeichnet, dass** die Führungsfläche eine Bruchstelle enthält.

6. Führungsfläche nach Anspruch 1, **dadurch gekennzeichnet, dass** die Seitenfläche eine Schicht aus einem die Gleitbewegung erleichternden Material trägt.

7. Führungsfläche nach Anspruch 1, **dadurch gekennzeichnet, dass** die waagrecht verlaufende Rolle (7) an einer Schwenklagerung (13) gelagert ist

8. Führungsfläche nach Anspruch 7, **dadurch gekennzeichnet, dass** die Lagerung zwei Wangen enthält.

9. Führungsfläche nach Anspruch 8, **dadurch gekennzeichnet, dass** die Lagerung zwei Einschnitte (14) enthält, um die Achse der Rolle aufzunehmen.
